Europäisches Patentamt

European Patent Office

Office européen des brevets

(11) Veröffentlichungsnummer: **0 502 329 A1**

# (12) EUROPÄISCHE PATENTANMELDUNG

(21) Anmeldenummer: **92101859.4**

(22) Anmeldetag: **05.02.92**

(51) Int. Cl.5: **C01B 33/32**

(30) Priorität: **07.03.91 DE 4107231**

(43) Veröffentlichungstag der Anmeldung:
**09.09.92 Patentblatt 92/37**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Schimmel, Günther, Dr.**
**Ehrenstrasse 16**
**W-5042 Erftstadt(DE)**
Erfinder: **Kotzian, Michael, Dr.**
**Sanddornweg 2**
**W-5042 Erftstadt(DE)**
Erfinder: **Tapper, Alexander, Dr.**
**Limitenstrasse 152**
**W-4050 Mönchengladbach(DE)**
Erfinder: **Wingefeld, Gerd, Dr.**
**Wilhelm-Leuschner-Strasse 7**
**W-6238 Hofheim(DE)**

(54) Verfahren zur Herstellung von Natriumsilikaten.

(57) Zur Herstellung von amorphen Natriumsilikaten mit einem Wassergehalt von 0,3 bis 6 Gewichts-% und einem Molverhältnis von $SiO_2$ zu $Na_2O$ von (1,9 bis 2,8) : 1 aus einer durch Umsetzung von Sand mit Natronlauge im Molverhältnis $SiO_2$ : $Na_2O$ von (2,0 bis 2,8) : 1 gewonnenen Wasserglaslösung mit mindestens 20 Gewichts-% Feststoff behandelt man die Wasserglaslösung in einer Sprühtrocknungszone mit Heißluft von 200 bis 300°C unter Bildung eines pulverförmigen, amorphen Natriumsilikates mit einem Wassergehalt (ermittelt als Glühverlust bei 700°C) von 15 bis 23 Gewichts-%. Das sprühgetrocknete, pulverförmige, amorphe Natriumsilikat mahlt man zunächst auf, vorzugsweise auf Korngrößen von 1 bis 50 μm, bevor man es in einen geneigt angeordneten Drehrohrofen einbringt und darin im Gegenstrom mit Rauchgas mit Temperaturen von 250 bis 500°C unter Bildung von pulverförmigem, amorphem Natriumsilikat behandelt. Das aus dem Drehrohrofen austretende Natriumsilikat zerkleinert man auf Korngrößen von 0,1 bis 12 mm und mahlt es schließlich auf Korngrößen von 2 bis 400 μm.

EP 0 502 329 A1

Die vorliegende Erfindung betrifft ein Verfahren zur Herstellung von amorphen Natriumsilikaten mit einem Wassergehalt von 0,3 bis 6 Gewichts-%, vorzugsweise von 0,5 bis 2 Gewichts-% und einem Molverhältnis von $SiO_2$ zu $Na_2O$ von (1,9 bis 2,8) : 1 aus einer durch Umsetzung von Sand mit Natronlauge im Molverhältnis $SiO_2$ : $Na_2O$ von (2,0 bis 2,8) : 1 gewonnenen Wasserglaslösung mit mindestens 20 Gewichts-% Feststoff, Sprühtrocknen der Wasserglaslösung mit Heißluft von 200 bis 300°C unter Bildung eines pulverförmigen, amorphen Natriumsilikates mit einem Wassergehalt (ermittelt als Glühverlust bei 700°C) von 15 bis 23 Gewichts-%, Behandeln des in einem geneigt angeordneten Drehrohrofen eingebrachten pulverförmigen, amorphen, wasserhaltigen Natriumsilikates im Gegenstrom mit Rauchgas mit Temperaturen von 250 bis 500°C unter Bildung von pulverförmigem, amorphem Natriumsilikat; Zerkleinern des aus dem Drehrohrofen austretenden Natriumsilikates auf Korngrößen von 0,1 bis 12 mm und anschließendes Mahlen auf Korngrößen von 2 bis 400 $\mu m$.

Aus der nichtvorveröffentlichten deutschen Patentanmeldung P 40 31 849.4 ist ein Verfahren zur Herstellung von emorphen Natriumsilikaten mit einem Wassergehalt von 0,3 bis 6 Gewichts-% und einem Molverhältnis von $SiO_2$ zu $Na_2O$ von (1,9 bis 2,8) : 1 aus einer Wasserglaslösung bekannt. Dabei behandelt man die durch Umsetzung von Quarzsand mit Natronlauge im Molverhältnis $SiO_2$ zu $Na_2O$ von (2,0 bis 2,8) : 1 gewonnene Wasserglaslösung in einer Sprühtrocknungszone mit Heißluft von 200 bis 300°C unter Bildung eines pulverförmigen, amorphen Natriumsilikates mit einem Wassergehalt (ermittelt als Glühverlust bei 700°C) von 15 bis 23 Gewichts-%. Dieses pulverförmige amorphe Natriumsilikat bringt man in einen geneigt angeordneten Drehrohrofen ein und behandelt es darin mit Rauchgas bei Temperaturen von 250 bis zu 500°C im Gegenstrom. Das aus dem Drehrohrofen austretende amorphe Natriumsilikat wird zunächst auf Korngrößen von 0,1 bis 12 mm zerkleinert und schließlich auf Korngrößen von 2 bis 400 $\mu m$ gemahlen.

Nachteilig ist bei diesem Verfahren, daß das sprühgetrocknete, amorphe Natriumsilikat wegen seiner Hohlkugelstruktur bei seinem Einbringen in den Drehrohrofen einen extrem leichten Staub bildet, wodurch neben einer hohen Belastung des Abgasfilters der Drehrohrofen überfüllt und wegen des dadurch behinderten Stofftransports im Drehrohrofen seine Kapazität erniedrigt wird.

Die genannten Nachteile werden erfindungsgemäß dadurch überwunden, daß man das sprühgetrocknete, pulverförmige, amorphe Natriumsilikat vor seinem Einbringen in den Drehrohrofen aufmahlt.

Das Verfahren gemäß der Erfindung kann auch noch dadurch ausgestaltet sein, daß man auf Korngrößen von 1 bis 50 $\mu m$ aufmahlt. Dabei kann die Aufmahlung mit Hilfe jeden Mühlentyps erfolgen, der in der Lage ist, die geforderte Kornfeinheit bereitzustellen.

Beim erfindungsgemäßen Verfahren weist das aus dem Drehrohrofen abströmende Abgas nur einen geringen Staubgehalt auf.

Beim Verfahren gemäß der Erfindung ist im Drehrohrofen ein höherer Füllgrad möglich, wodurch die Kapazität des Drehrohrofens erhöht wird.

Beim erfindungsgemäßen Verfahren klebt an der Innenwandung des Drehrohrofens praktisch kein Material an, was eine Verbesserung der Qualität des aus dem Drehrohrofen austretenden Natriumsilikates mit sich bringt.

Die in den folgenden Beispielen angegebenen Resthärten wurden nach folgender Vorschrift ermittelt:

2,5 g Natriumsilikat wurden in 1000 ml Leitungswasser mit 16° dH (entspricht einem Gehalt von 85 mg Ca und 15 mg Mg je Liter) suspendiert. Die Suspension wurde 30 Minuten bei 60°C mit einem Magnetrührer mit ca. 500 Upm gerührt. Nach schnellem Abkühlen in Eiswasser auf 20°C wurde die Suspension über ein Membranfilter (Porenweite: 0,45 $\mu m$) filtriert. Im klaren Filtrat wurden die Gehalte an Calcium und Magnesium mittels Atomabsorption bestimmt.

Beispiel 1 (Vergleichsbeispiel)

In einen mit Nickel ausgekleideten, zylindrischen Autoklaven mit Rühreinrichtung wurden Sand (99 Gewichts-% $SiO_2$; Körnung: 90 % < 0,5 mm) und 50 gewichts-%ige Natronlauge im molaren Verhältnis von $SiO_2$ zu $Na_2O$ von 2,15 : 1 eingefüllt. Die Mischung wurde bei gerührtem Autoklaven durch Aufpressen von Wasserdampf (16 bar) auf 200°C erhitzt und 60 Minuten bei dieser Temperatur gehalten. Dann wurde der Inhalt des Autoklaven über ein Ausdampfgefäß in einen Behälter entspannt und nach Zusatz von 0,3 Gewichts-% Perlit als Filterhilfsmittel bei 90°C zur Abscheidung des Unlöslichen über ein Scheibendruckfilter filtriert. Als Filtrat wurde eine klare Wasserglaslösung mit einem molaren Verhältnis von $SiO_2$ zu $Na_2O$ von 2,04 : 1 erhalten. Durch Verdünnen mit Wasser wurde ein Feststoffgehalt von 50 % eingestellt.

In einen mit einem Scheibenzerstäuber ausgerüsteten Heißluftsprühturm, welcher über eine gasbefeuerte Brennkammer beheizt wurde und mit einem pneumatisch abreinigenden Schlauchfilter zur Produktabscheidung verbunden war, wurde die Wasserglaslösung versprüht, wobei die Brennkammer so eingestellt war, daß das am Turmkopf eintretende heiße Gas eine Temperatur von 260°C aufwies. Die Menge der zu versprühenden Wasserglaslösung wurde so eingestellt, daß die Temperatur des den Sprühturm verlassenden Silikat-Gas-Gemisches 105°C betrug. Aus dem Volumen des Sprühturmes und aus dem Gasdurchsatz durch den Sprühturm wurde die Verweilzeit zu 16 Sekunden berechnet. Das am Schlauchfilter abgeschiedene amorphe Natriumdisilikat wies ein Schüttgewicht von 480 g/l, einen Eisengehalt von 0,01 Gewichts-%, ein $SiO_2 : Na_2O$-Verhältnis von 2,04 : 1 und einen Glühverlust bei 700°C von 19,4 % auf; sein mittlerer Teilchendurchmesser betrug 52 $\mu$m.

In einen direkt befeuerten Drehrohrofen (Länge: 5 m; Durchmesser: 78 cm; Neigung: 1,2°) wurde an seinem der Flamme gegenüberliegenden Ende das sprühgetrocknete Natriumdisilikat aufgegeben, während das teilweise calcinierte Produkt an der Flammseite ausgetragen wurde. Dieser Drehrohrofen war mit mehrlagiger Mineralwolle und einem Blechmantel derart isoliert worden, daß bei einer Temperatur im Inneren des Drehrohrofens von 390°C an seiner Außenhaut eine Temperatur von maximal 38°C auftrat. In diesen Drehrohrofen wurden stündlich 60 kg des amorphen Natriumdisilikates eingetragen. Das den Drehrohrofen verlassende Natriumdisilikat ($Na_2Si_2O_5$), welches einen Wassergehalt (ermittelt als Glühverlust bei 700°C) von 0,7 Gewichts-% aufwies, wurde mit Hilfe eines mechanischen Brechers auf eine Körnung von weniger als 6 mm zerkleinert und nach einer Zwischenkühlung auf einer Scheibenmühle (Durchmesser: 30 cm) bei 400 min⁻¹ auf einen mittleren Teilchendurchmesser von 95 $\mu$m gemahlen, wobei der Eisengehalt des gemahlenen Produktes mit dem des in den Drehrohrofen eingetragenen Natriumdisilikates identisch blieb.

Das Abgas des Drehrohrofens wurde im Eintragsbereich für das amorphe Natriumsilikat abgesaugt und mit Hilfe eines hitzebeständigen Tuchfilters gereinigt. Aus dem Filter wurden stündlich 3 kg Natriumdisilikat ausgetragen, welches in den Eintrag des Drehrohrofens rückgeführt wurde.

Die Resthärte von mit dem so hergestellten Natriumdisilikat behandeltem Wasser betrug 2,5 mg/l Ca und 1 mg/l Mg.

Beispiel 2 (gemäß der Erfindung)

Das nach Beispiel 1 im Heißluftsprühturm hergestellte amorphe Natriumdisilikat mit einem Schüttgewicht von 480 g/l wurde mit Hilfe einer schnellaufenden Schlägermühle aufgemahlen, wobei ein Produkt mit einem mittleren Durchmesser $d_{50}$ = 22 $\mu$m und einem Schüttgewicht von 650 g/l resultierte.

Vergleicht man das im Heißluftsprühturm erhaltene amorphe Natriumdisilikat vor und nach seiner Mahlung in der Schlägermühle unter dem Mikroskop miteinander, so ist deutlich erkennbar, daß die ursprünglichen Hohlkugeln zu Bruchstücken von Kugeln zertrümmert worden sind.

In den in Beispiel 1 verwendeten und unter den dort beschriebenen Bedingungen betriebenen Drehrohrofen wurden stündlich 120 kg des aufgemahlenen amorphen Natriumdisilikates eingetragen, wobei sich keinerlei Verklebungen an der Innenwand des Drehrohrofens ausbildeten. Am Tuchfilter, mit dessen Hilfe die im Eintragsbereich für das amorphe Natriumdisilikat abgesaugte Luft entstaubt wurde, fielen stündlich 1,5 kg Natriumdisilikat mit einem Schüttgewicht von 230 g/l an, welches in den Eintrag des Drehrohrofens rückgeführt wurde.

Die Resthärte von mit dem so hergestellten Natriumdisilikat behandelten Wasser betrug 2 mg/l Ca und weniger als 1 mg/l Mg.

**Patentansprüche**

1. Verfahren zur Herstellung von amorphen Natriumsilikaten mit einem Wassergehalt von 0,3 bis 6 Gewichts-%, vorzugsweise von 0,5 bis 2 Gewichts-% und einem Molverhältnis von $SiO_2$ zu $Na_2O$ von (1,9 bis 2,8) : 1 aus einer durch Umsetzung von Sand mit Natronlauge im Molverhältnis $SiO_2 : Na_2O$ von (2,0 bis 2,8) : 1 gewonnenen Wasserglaslösung mit mindestens 20 Gewichts-% Feststoff, Sprühtrocknen der Wasserglaslösung mit Heißluft von 200 bis 300°C unter Bildung eines pulverförmigen, amorphen Natriumsilikates mit einem Wassergehalt (ermittelt als Glühverlust bei 700°C) von 15 bis 23 Gewichts-%, Behandeln des in einem geneigt angeordneten Drehrohrofen eingebrachten pulverförmigen, amorphen, wasserhaltigen Natriumsilikates im Gegenstrom mit Rauchgas mit Temperaturen von 250 bis 500°C unter Bildung von pulverförmigem, amorphem Natriumsilikat, Zerkleinern des aus dem Drehrohrofen austretenden Natriumsilikates auf Korngrößen von 0,1 bis 12 mm und anschließendes Mahlen auf Korngrößen von 2 bis 400 $\mu$m, dadurch gekennzeichnet, daß man das sprühgetrocknete, pulverförmige, amorphe Natriumsilikat vor seinem Einbringen in den Drehrohrofen aufmahlt.

2. Verfahren nach Anspruch 1, dadurch gekennzeichnet, daß man auf Korngrößen von 1 bis 50 $\mu$m aufmahlt.

Europäisches
Patentamt

**EUROPÄISCHER RECHERCHENBERICHT**

Nummer der Anmeldung

EP    92 10 1859

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 157 943 (J.M.HUBER CORP.)<br>--- | | C01B33/32 |
| A | EP-A-0 170 040 (HENKEL KGAA)<br>--- | | |
| A | EP-A-0 293 640 (HOECHST AG)<br>--- | | |
| P,A | EP-A-0 425 427 (HOECHST AG)<br>* Beispiel 2 * | 1 | |
| D,P,<br>A | & DE-A-4 031 849 | | |
| | ----- | | |
| | | | **RECHERCHIERTE SACHGEBIETE (Int. Cl.5)**<br><br>C01B |

Der vorliegende Recherchenbericht wurde für alle Patentansprüche erstellt

| Recherchenort | Abschlußdatum der Recherche | Prüfer |
|---|---|---|
| DEN HAAG | 09 JUNI 1992 | BREBION J.C. |

EPO FORM 1503 03.82 (P0401)